Europäisches Patentamt

European Patent Office

Office européen des brevets

(19)

(11) Veröffentlichungsnummer : **0 163 670**
**B1**

# (12) EUROPÄISCHE PATENTSCHRIFT

(45) Veröffentlichungstag der Patentschrift :
01.02.89

(21) Anmeldenummer : 84904096.9

(22) Anmeldetag : 02.11.84

(86) Internationale Anmeldenummer :
PCT/DE 84/00232

(87) Internationale Veröffentlichungsnummer :
WO/85024 (06.06.85 Gazettee 85/13)

(51) Int. Cl.⁴ : **G 06 F 11/00**

(54) VORRICHTUNG ZUR ÜBERWACHUNG VON ELEKTRONISCHEN RECHENBAUSTEINEN, INSBESONDERE MIKRO-PROZESSOREN.

(30) Priorität : 30.11.83 DE 3343227

(43) Veröffentlichungstag der Anmeldung :
11.12.85 Patentblatt 85/50

(45) Bekanntmachung des Hinweises auf die Patenterteilung : 01.02.89 Patentblatt 89/05

(84) Benannte Vertragsstaaten :
DE FR GB SE

(56) Entgegenhaltungen :
EP—A— 0 027 432
FR—A— 2 414 755

(73) Patentinhaber : ROBERT BOSCH GMBH
Robert-Bosch-Platz 1
D-7016 Gerlingen-Schillerhöhe (DE)

(72) Erfinder : URBAN, Manfred
Mörikestr. 3
D-7151 Auenwald 3 (DE)

**Beschreibung**

Die Erfindung geht aus von einer Vorrichtung zur Überwachung von elektronischen Rechenbausteinen, insbesondere Mikroprozessoren, nach der Gattung des Hauptanspruches.

Stand der Technik

Aus der DE-OS 28 42 392 und der DE-OS 29 03 638 sind Überwachungseinrichtungen für programmgesteuerte Vorrichtungen bekannt, die kurzzeitige Störungen oder Systemausfälle erkennen, und darauf einen Reset- oder Interrupt-Eingang eines Mikroprozessors betätigen. Dadurch wird der momentane Programmablauf gestoppt und durch Rücksetzung auf den Programmbeginn ordnungsgemäß in Gang gebracht, um eine Notschalteinrichtung zu betätigen. Problematisch an einer derartigen Einrichtung ist, daß keine Unterscheidung möglich ist, ob eine Rücksetzung (Reset) von der Überwachungseinrichtung (sog. Watch-Dog-Reset) oder durch andere Ursachen, wie beispielsweise durch Einschalten der Versorgungsspannung (sog. Power-on-Reset) geschehen ist.

Um nach dem Einschalten der Versorgungsspannung einen definierten Zustand zu erreichen, von dem ein normaler Programmablauf aus gestartet werden kann, ist es erforderlich, daß die Notschalteinrichtung erst nach Erreichen eines stabilen Zustandes des Mikroprozessors auf den Mikroprozessor geschaltet wird. Durch schaltungstechnische bzw. programmgesteuerte Maßnahmen ist es erforderlich, daß die Aufschaltung der Überwachungseinrichtung so erfolgt, daß nicht sofort ein Rücksetzsignal der Überwachungseinrichtung den Mikroprozessor stoppt und wieder anlaufen läßt.

Aus der DE-OS 32 40 704 ist eine Schaltungsanordnung zur Überwachung von elektronischen Rechenbausteinen bekannt, die bei länger anhaltenden Störungen immer wieder durch Rücksetzsignale einen erneuten Programmstart des Rechenbausteins versucht. Auch hier ist problematisch, daß keine Unterscheidung zwischen einer Rücksetzung durch Einschalten der Versorgungsspannung, bzw. durch Betätigen einer Rücksetz-Taste oder einer Rücksetzung durch eine Überwachungseinrichtung möglich ist.

Aus der EP-A 27 432 ist eine Vorrichtung zur Überwachung von elektronischen Rechenbausteinen bekannt, die eine Rücksetzung des Rechenbausteins bei einer Störung der Stromversorgung ermöglicht. Beim Wiedereintritt der Stromversorgung wird geprüft, ob während dieser Zeit der Netzschalter geöffnet war oder nicht. War der Netzschalter geöffnet, so sind die Daten im nicht flüchtigen Speicher verloren gegangen, da damit gleichzeitig die Stromversorgung des Speichers zur Batterie unterbrochen war. Aus der FR-A 2 414 755 ist ein Mikrorechner für ein Fahrzeug bekannt, in dem Daten im flüchtigen bzw. im nicht flüchtigen Speicher abgelegt sind. Die in den unterschiedlichen Speicher abgelegten Werte werden miteinander verglichen, um ein ordnungsgemäßes Arbeiten des Mikroprozessors feststellen zu können. Maßnahmen zur Erkennung unterschiedlicher Rücksetzvorgänge sind den beiden letztgenannten Entgegenhaltungen nicht zu entnehmen.

Vorteile der Erfindung

Die erfindungsgemäße Einrichtung zur Überwachung von elektronischen Rechenbausteinen, insbesondere Mikroprozessoren, mit den kennzeichnenden Merkmalen des Hauptanspruchs hat demgegenüber den Vorteil, daß durch eine einfache programmgesteuerte Entscheidung zu Beginn des der Rücksetzung folgenden Programmteiles eine Erkennung möglich ist, ob die Rücksetzung unbedingt oder durch die Tätigkeit einer Überwachungseinrichtung bedingt ausgelöst wurde. Da diese Entscheidung programmgesteuert durch den Mikroprozessor vorgenommen wird, ist es leicht möglich, Änderungen bzw. weitere Entscheidungen in den Entscheidungsablauf zu implementieren. Das hat den Vorteil, den Wiederanlauf des Programmes erheblich zu verkürzen, da eine vollständige Reinitialisierung der Register und ein Neuladen des Benutzerprogrammes nicht mehr notwendig ist. Von weiterem Vorteil ist, daß eine Entscheidung keine besondere schaltungstechnische Ausarbeitung erfordert.

Zeichnung

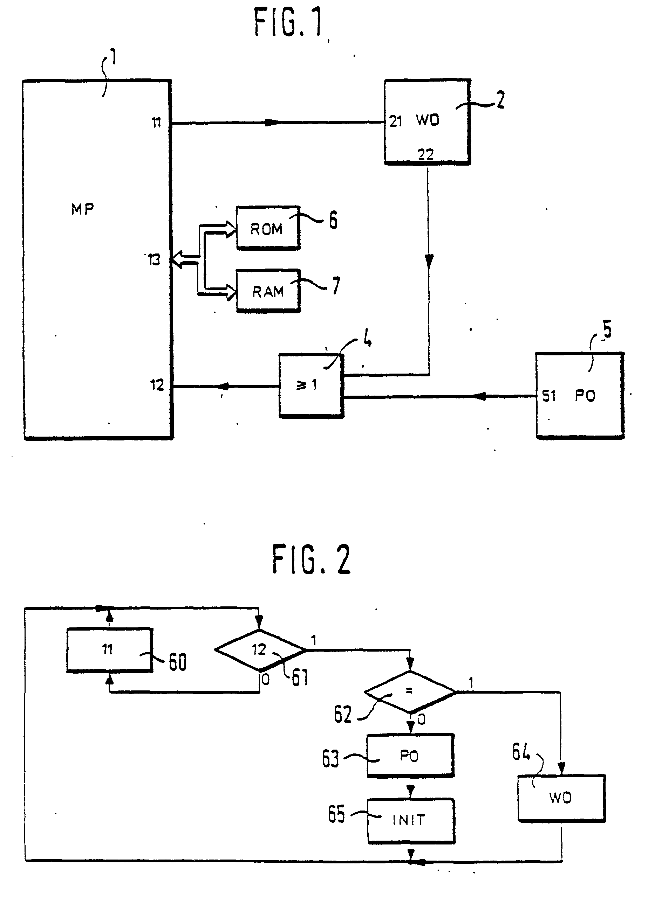

Ein Ausführungsbeispiel ist in der Zeichnung dargestellt und in der nachfolgenden Beschreibung näher erläutert. Es zeigt Figur 1 ein Schaltdiagramm einer vorrichtung und Figur 2 ein Signaldiagramm zur Erläuterung der Wirkungsweise.

Beschreibung des Ausführungsbeispieles

Es zeigt Figur 1 einen Mikroprozessor (MP) 1, eine Überwachungseinrichtung (Watch-Dog) 2, eine Power-on-Reset-Schaltung (PO) 5, einen Festwertspeicher (ROM) 6 und einen flüchtigen Speicher (RAM) 7.

Der Mikroprozessor 1 ist über einen Bus an einem Ausgang 13 mit dem Festwertspeicher 6 und dem flüchtigen Speicher 7 verbunden. Ein Ausgang 11 des Mikroprozessors 1 ist mit einem Eingang 21 des Watch-Dog 2 verbunden, dessen Ausgang 22 an einen Eingang eines ODER-Gliedes 4 angeschlossen ist. Ein weiterer Eingang des ODER-Gliedes 4 ist mit einem Ausgang 51 der Power-on-Reset-Schaltung 5 verbunden, der Ausgang des ODER-Gliedes führt an einen Eingang 12 des Mikroprozessors 1.

Der Mikroprozessor 1 liefert über den Ausgang 11 dem Watch-Dog 2 in bekannter Weise statistisch verteilte Signale in einem definierten Frequenzbereich. Liegt das Signal außerhalb dieses Frequenzbereiches, z. B. bei Stillstand, so liegt ein undefinierter Programmablauf des Mikroprozessors 1 vor, der vom Watch-Dog 2 erkannt wird, welcher darauf eine bedingte Rücksetzung über das ODER-Glied 4 auslöst. Bei Einschalten der Versorgungsspannung wird durch die Power-on-Reset-Schaltung 5 über das ODER-Glied 4 eine unbedingte Rücksetzung ausgelöst.

Nach Figur 2 ist im Normalzustand der Mikroprozessor 1 in einer Schleife zwischen einem Hauptprogramm 60, in dem mindestens ein Impuls am Ausgang 11 gebildet wird, und einer Reset-Abfrage 61 durch Abfragen des Eingangs 12. Dabei spielt es keine Rolle, ob diese Abfrage im für die konkrete Anwendung gewählten Mikroprozessortyp durch ein Programm oder durch schaltungstechnische Maßnahmen realisiert ist. Liegt also keine Rücksetzung vor (« 0 »), so wird im Hauptprogramm 60 weitergefahren.

Bei Vorliegen einer Rücksetzung (« 1 ») wird ein Mustervergleich 62 durchgeführt. Dieser Mustervergleich ermöglicht es zu erkennen, ob eine Rücksetzung durch den Watch-Dog 2 oder durch die Power-on-Reset-Schaltung 5 erfolgt. Bei Power-on-Reset liegt im flüchtigen Speicher des Mikroprozessors 1 ein undefiniertes Muster vor. Bei Watch-Dog-Rücksetzung liegt mindestens in einem kleinen Teil des flüchtigen Speichers ein für die Vorgeschichte einer Watch-Dog-Rücksetzung typisches Muster vor, das apriori bekannt ist. Für den Vergleich 62 vird ein diesem typischen Muster entsprechendes Vergleichsmuster aus dem Festwertspeicher 6 geladen, und mit dem Muster in dem betreffenden flüchtigen Speicher verglichen. Bei Gleichheit bzw. typischer teilweiser Gleichheit dieser Muster (« 1 ») wird zu einem Programmteil 64 verzweigt, der eine der Watch-Dog-Rücksetzung zugeordnete Aufgabe ausführt und den Watch-Dog 2 über den Ausgang 11 des Mikroprozessors 1 reaktiviert. Bei Nichtgleichheit der Muster (« 0 ») wird zu einem Programmteil 63 verzweigt, der den Power-on-Reset behandelt und eine Reinitialisierung 65 des Gesamtsystems veranlaßt. Nach Beendigung der Programme 63, 65 oder 64 ist die Vorrichtung nach Figur 1 wieder im Programmzustand 60, 61 nach Figur 2.

**Patentansprüche**

1. Einrichtung zur Überwachung von Rechenbausteinen (1), insbesondere Mikroprozessoren, mit einer Rücksetzeinrichtung (5), die bei störungen der stromversorgung anspricht, und mit Mitteln zur Prüfung von in flüchtigen Speichern abgelegten Werten nach dem Rücksetzvorgang, dadurch gekennzeichnet, daß eine weitere Überwachungseinrichtung (2) vorgesehen ist, die Signale abgibt, wenn der Rechnerbaustein (1) keine Signale abgibt, daß die Signale der Rücksetzeinrichtung (5) und der Überwachungseinrichtung (2) einem Eingang (12) des Rechenbausteins (1) zugeführt sind und daß der Rechenbaustein (1) beim Auftreten eines Signals der Rücksetzeinrichtung (5) oder der Überwachungseinrichtung (2) die im flüchtigen speicher (7) abgelegten Werte mit in einem nicht flüchtigen speicher (6) vorhandenen Muster vergleicht und daß bei zumindest teilweiser Gleichheit zwischen dem Muster und dem im flüchtigen speicher (7) abgelegten Werten eine Entscheidung dahingehend durchgeführt wird, daß die Rücksetzung von der Überwachungseinrichtung (2) veranlaßt wurde.

2. Einrichtung nach Anspruch 1, dadurch gekennzeichnet, daß bei zumindest teilweiser Gleichheit zwischen dem Muster und dem Vergleichsmuster ein Programm (64) durchgefürt wird, das eine einer Rücksetzung durch die Überwachungseinrichtung (2) zugeordnete Funktion ausführt.

3. Einrichtung nach Anspruch 2, dadurch gekennzeichnet, daß die Funktion eine Aktivierung der Überwachungseinrichtung (2) beinhaltet.

**Claims**

1. Apparatus for monitoring computing elements (1), particularly microprocessors, comprising a reset device (5) which responds in the case of disturbances of the power supply, and with means for checking values stored in volatile memories after the resetting process, characterized in that a further watchdog (2) is provided which emits signals when the computing element (1) does not emit any signals, that the signals of the resetting device (5) and of the watchdog (2) are supplied to an input (12) of the computing element (1), and that the computing element (1), on occurrence of a signal of the resetting device (5) or of the watchdog (2), compares the values stored in the volatile memory (7) with a pattern present in a non-volatile memory (6), and that, in the case of at least partial equality between the pattern and the values stored in the volatile memory (7), a decision is made to the effect that the resetting was caused by the watchdog (2).

2. Apparatus according to Claim 1, characterized in that, in the case of at least partial equality between the pattern and the reference pattern, a program (64) is executed which performs a function allocated to a resetting by the watchdog (2).

3. Apparatus according to Claim 2, characterized in that the function contains an activation of the watchdog (2).

**Revendications**

1. Appareil de surveillance d'éléments électroniques de calcul (1), notamment de microprocesseurs, avec un dispositif de remise à l'état initial (5), qui réagit en cas de perturbations de l'alimentation en courant, et avec des moyens pour contrôler, après le processus de remise à l'état initial, des valeurs déposées dans des mémoires non permanentes, appareil caractérisé en ce qu'il est prévu un autre dispositif de surveillance (2), qui délivre des signaux quand l'élément électronique de calcul (1) ne délivre aucun signal, les signaux du dispositif de remise à l'état initial (5) et du dispositif de surveillance (2) étant appliqués à une entrée (12) de l'élément électronique de calcul (1), et cet élément électronique de calcul (1), lors de l'apparition d'un signal du dispositif de remise à l'état initial (5) ou du dispositif de surveillance (2), compare les valeurs déposées dans la mémoire non-permanente (6), et en cas d'identité, tout au moins partielle, entre le modèle et les valeurs déposées dans la mémoire non permanente (7), une décision est élaborée, selon laquelle la remise à l'état initial a été provoquée par le dispositif de surveillance (2).

2. Appareil selon la revendication 1, caractérisé en ce qu'en cas d'identité au moins partielle entre le modèle et le modèle de comparaison, un programme (64) est élaboré, qui met en œuvre une fonction associée à une remise à l'état initial par le dispositif de surveillance (2).

3. Appareil selon la revendication 2, caractérisé en ce que cette fonction comporte une activation du dispositif de surveillance (2).

# FIG.1

# FIG. 2